# EUROPEAN PATENT APPLICATION

(11) **EP 2 368 604 A1**
(43) Date of publication of application: **28.09.2011**
(21) Application number: 10157260.0
(22) Date of filing: 22.03.2010
(51) Int. Cl.: A63B 49/14, C09J 7/02

(54) **Racket tape**

(71) Applicant: Monsma Research BV, 1016 HK Amsterdam (NL)
(72) Inventor: Monsma, Douwe, 1016 HK, Amsterdam (NL)
(74) Representative: Farago, Peter Andreas

(57) **Abstract**

The present invention relates to low friction guard tape for use in a game racket. Preferably, the guard tape preferably contains UHMW-PE polymer material. The invention is further directed to low friction guard tape containing enforcing materials and optionally illustrative materials and/or cushioning layers, as well as to a method of preparing double curved tape, packaging of double curved tape, and a method of applying tape to a double curved surface.

## Description

### Field of invention

The invention relates to protection of game rackets and sport racket frames.

### Background

Sport rackets such as used for tennis, squash and racket ball can be exposed to impact with the court walls and surface during play sessions, resulting in wear of the top portion of the racket head.

Racket heads may be outfitted with an integrated bumper with grommet holes, although not all of them do (such as the x-Lite series by Eyerackets). Bumpers tend to be made from nylon. Even though these bumpers are used to prevent damage to the racket, upon impact, these guards themselves can shatter and break. Replacement of such broken bumpers requires not only purchasing a new bumper but also restringing the racket, a tedious and time consuming exercise.

Guard tape, sometimes called head crash tape, can also be used. However, this tape can have high friction with the court walls or surface, leading to lower success rates of returning balls that are close to the court wall or surface. Further, the tape wears out quickly, requiring replacement after only a few hours of play time. The tape is often difficult to remove as it has been chafed into small separate pieces. Such tapes are commercially available, for instance as Karakal Crash Tape, which is made of polyurethane foam with an estimated dynamic coefficient of friction (COF) of 0.7, and Gamma Dura Guard, which is made of polyvinylchloride (PVC) with an estimated dyamic COF of larger than 0.5.

In racket games such as squash and racket ball, balls that are played close to the court wall or surface are amongst the hardest to be properly returned. The potential of breaking a racket can make a player more stressed and less confident about returning such a ball, leading to suboptimal gaming results. Consequently, there is a need to improve on the rackets and guard tape of the prior art to achieve a more favorable game outcome. We have found that the problems of the prior art can be overcome by the present invention.

### Summary of the invention

The present invention is directed to a game racket with a low friction tape containing a body and an adhesive layer wherein the body has a top layer with a dynamic coefficient of friction of less than 0.4. The invention also relates to low friction tape containing a body and an adhesive layer wherein the body contains a top layer with a dynamic coefficient of friction of less 0.4 and wherein the body further contains reinforcing material. Further, the invention relates to a method of manufacturing tape with an adhesive layer and a body containing a low friction top layer and reinforcing material, wherein the adhesive layer is attached to the body with a chemical bond and wherein the tape preferably contains illustrative material. The invention also relates to packaging containing tape, wherein the tape has a low friction surface with a dynamic coefficient of friction of less than 0.4 and is double curved. Furthermore, the invention relates to a method of applying tape to an object, preferably a racket, wherein the tape has a top layer with a dynamic coefficient of friction of less than 0.4 and the tape is attached to the surface of the object, the tape preferably containing illustrative material.

We have found that the tape according to the invention overcomes the problems of the prior art. Specifically, the low friction provided by the guard tape of the invention allows for sliding the racket against court walls and surfaces, increasing the chance of properly returning balls. In fact, improved sliding & reduced wear makes the player more confident, leading -in turn- to even better returns. The guard tape is preferably thin and light of weight, not perceptibly affecting the weight distribution of the racket. Preferably, the guard tape can be easily applied and removed, after extended use, prior or after restringing ofthe racket. Accordingly, the invention is directed to guard tape that has a low friction coefficient, particularly to such guard tape that is impact, wear and tear resistant, yet manually stretchable around doubled curved racket frames. Although preferred as protection, tape of the invention can also be used as tape for other purposes.

### Details of the invention

### Discussion of the drawings

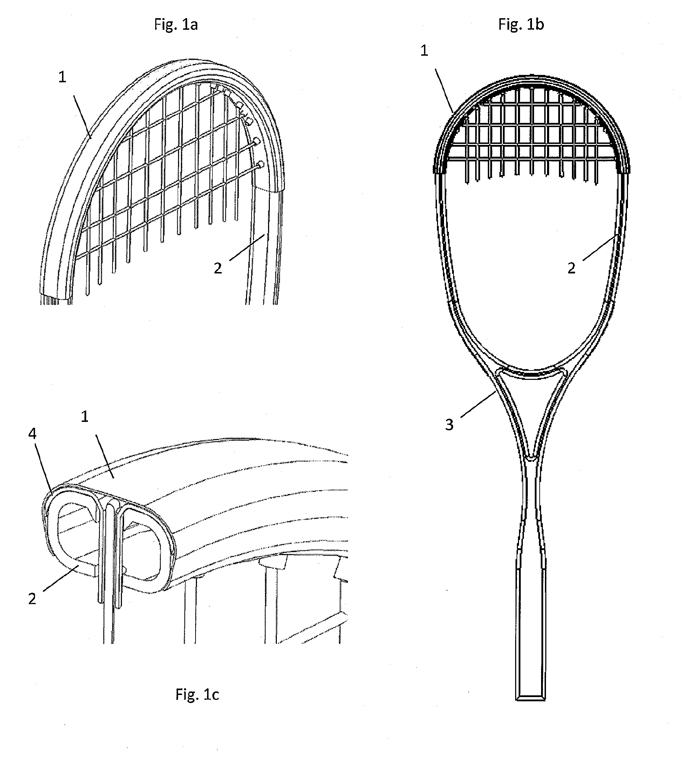

Figure 1a shows detail of head frame portion of squash racket with guard tape; 1 represents the guard tape according to this invention, taped around the double curved surface of the racket frame head; 2 represents the racket head. Figure 1b shows squash racket with guard tape according to the invention; 1 represents the guard tape, taped around the double curved surface of the racket frame head; 2 represents the racket head; 3 represents the squash racket. Figure 1c shows a cross-sectional detailed view of head frame portion of squash racket with guard tape; 1 represents the guard tape according to this invention, taped around the double curved surface of the racket frame head; 2 represents the racket head; 4 represents the integrated bumper.

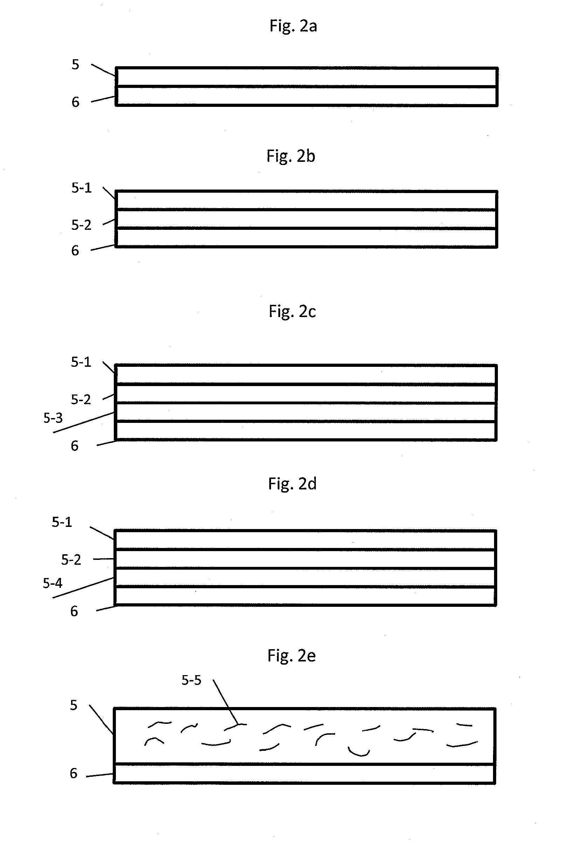

Figure 2a shows guard tape with body and adhesive layer. 5. represents the body; 6 represents the adhesive layer.
Figure 2b shows guard tape with low friction body, fiber reinforcement and adhesive. 5-1 represents the low friction top layer; 5-2 represents the fiber layer; 6 represents the adhesive layer. Both 5-1 and 5-2 form part of general body 5.
Figure 2c shows the laminated fiber reinforced guard tape with top layer and adhesive layer; the fiber is laminated between two layers made of identical materials; 5-1 represents the top laminating layer; 5-2 represents the fiber layer; 5-3 represents the bottom laminating layer; 6 represents the adhesive layer.
Figure 2d shows the laminated fiber reinforced guard tape with top layer and adhesive layer. The fiber is laminated between two layers of different materials: a top layer and a cushioning layer or tear resistant layer; 5-1 represents the top layer; 5-2 represents the fiber layer; 5-4 represents the cushioning layer or the tear resistant layer; 6 represents the adhesive layer.
Figure 2e shows laminated fiber reinforced guard tape with a body and an adhesive. The short fibers are distributed through the body. 5 represents the body; 5-5 represents short fibers distributed through the top layer; 6 represents the adhesive layer.

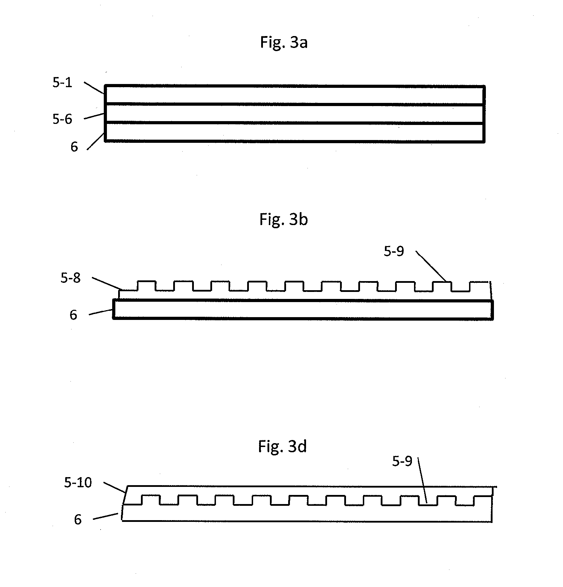

Figure 3a shows a top layer laminated to a tear resistant layer and an adhesive layer; 5-1 represents the top layer; 5-7 represents the tear resistant layer; 6 represents the adhesive layer.
Figure 3b shows guard tape with an embossed body and an adhesive layer; 5-8 represents the embossed body; 5-9 represents a ridge in the embossed pattern; 6 represents the adhesive layer.
Figure 3c shows guard tape with inverted embossed body and an adhesive layer; 5-10 represents the body consisting of an inverted embossed polymer material; 5-9 represents a ridge in the embossed pattern; 6 represents the adhesive layer.

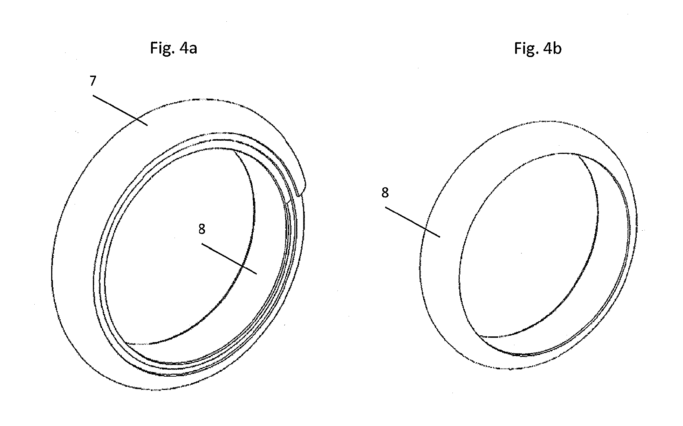

Figure 4a shows a pre-formed double curved tape on double curved spool. 7 represents preformed double curved guard tape; 8 represents double curved spool.
Figure 4b shows the double curved spool that holds the tape. 8 represents double curved spool.

### Guard tape

We have surprisingly found that guard tape having a surface with a low coefficient of friction allows for sliding the racket frame more easily along the court wall or surface, increasing the chance of returning the ball and scoring a point. We have also found that materials with low coefficient of friction can be quite hard and may be difficult to stretch to conform around the double curved surface of objects, a racket head. However, we have found that sufficient manual stretching can be accomplished while providing low coefficient of friction, adequate protection and low weight.

The coefficient of friction (COF), also known as a frictional coefficient or friction coefficient, symbolized by the Greek letter µ, is a dimensionless scalar value which describes the ratio of the force of friction between two bodies and the force pressing them together. The dynamic (or kinetic) COF is measured while there is a relative velocity between the two objects; the static COF is generally larger than the dynamic COF. Generally and in this patent application, the reference object is steel and the COF is dynamic. A common way for measuring the COF is by placing the object under study on a rotating or translating disc, and pressing a steel rod with known pressure onto the surface at 23°C. This instrument is called a motorized tribometer. The dynamic COF of the surface is measured. Since different methods can have different results, it is important that the dynamic COF as defined in the present invention is measured according to the USA standard ASTM D1894.

Preferably, the tape of the invention has a low friction surface, preferably with a dynamic coefficient of friction smaller than 0.4, more preferably smaller than 0.3, most preferably smaller than 0.2. As pointed out, the COF is the property of the material at the top surface of the tape, as measured by USA standard ASTM D1894. Preferably, the tape of the invention comprises at least one body and at least one adhesive layer. Preferably, the body comprises a top layer which is located on the outside, the surface, of the guard tape. Preferably, the top layer of the body has the low friction surface.

The tape of the invention is preferably thin for light weight, to allow manual stretch and permit the strings of the racket to move closely to the court wall or surface in order to hit the ball. Preferably, the guard tape has a thickness from 0,025mm, more preferably from 0.1mm and preferably up to 5mm, more preferably up to 0.5mm. If desired, two or more layers of tape can be applied on top of each other, not only for extra strength, but also for extra protection: if one layer tears, the underlying layer remains intact.

Preferably, the guard tape has a width of from 0.5cm, more preferably from 1.0cm, and preferably up to 7.0cm, more preferably up to 5.0cm. It will be understood that two (or even more) lines of tape can also be placed on the racket frame. For manual stretchability, preferably, the tape has a cross sectional surface area less than 1000mm², preferably less than 100mm². Although other applications can be envisaged, these measures enable optimal coverage of the racket frame and manual stretchability.

In order not to alter the balance of the racket, the guard tape preferably has a density smaller than 2 gram/cc. Preferably the guard tape has a weight from 0.2 gram to 30 gram. A heavier layer consisting of a higher density material - such as lead- may be added to turn the tape into a balance adjusting guard tape.

Preferably, the guard tape is manually stretchable. Most preferably, the longitudinal stretch of the tape is larger than 5% for a longitudinal load of 500N. In order to provide for stretchability for conforming the tape to the racket without breaking the tape and while providing high impact strength, the elongation at break of the guard tape is preferably larger than 10%.

In order to prevent marking of the tape material on the walls, the guard tape is preferably non-marking, more preferably transparent and/or colorless, for instance to maintain the original look of the racket. Preferably, the guard tape can be cleanly removed, to facilitate easy removal and replacement which is achieved by a combination of the adhesive and the tear resistance of the tape.

We have found that hard materials tend to be brittle and consequently, softer materials are preferred for the invention. Softer materials also dampen the impact when hitting the wall with the racket. Preferably, the guard tape has a hardness smaller than 75 Shore D, as measured according to ASTM D2240.

### Top layer

In order to provide for a low friction coefficient surface, the guard tape ofthe invention preferably comprises a body with a top layer.

Preferably, the top layer has a thickness of from 0.01mm, more preferably from 0.05mm, preferably to 0.5mm, more preferably to 0.25mm, such that it can be manually stretched around the double curved surface of the top of the racket head frame, yet remains strong enough to endure the repeated court wall and surface chaffing and impacts during ball games.

Preferably, the top layer has a dynamic coefficient of friction smaller than 0.4, more preferably smaller than 0.3, most preferably smaller than 0.2. Preferably, the top layer comprises one or more polymer materials. Preferably, the polymer is selected from thermoplastic elastomers, fluoropolymers, fluoroelastomers, rubbers, modified polyurethanes, modified polyvinylchloride (PVC), nylons, polyesters, polyolefines (preferably polyethylene and/or polypropylene), and mixtures thereof: For the purpose of the invention, polymers include elastomers.

### Fluoropolymers

Preferably, fluoropolymers are selected from PTFE (polytetrafluoroethylene), PFA (perfluoroalkoxy polymer resin), FEP (fluorinated ethylene-propylene), PVF (polyvinylfluoride), ECTFE (polyethylenechlorotrifluoroethylene), PVDF (polyvinylidene fluoride) and mixtures thereof:

### Fluoroelastomers

FKM (fluoroelastomer made from vinylidene fluoride monomers) is the designation for about 80% of fluoroelastomers as defined in ASTM D1418. Other fluorinated elastomers are perfluoro-elastomers (FFKM) and tetrafluoro ethylene/propylene rubbers (FEPM). All FKMs contain vinylidene fluoride as a monomer. Originally developed by DuPont (Viton), FKMs are today also produced by Daikin Chemical (Dai-EI), 3M's Dyneon (Dyneon Fluoroelastomers) and Solvay-Solexis (Tecnoflon). Fluorocarbon elastomers can be modified to lower the coefficient of friction of the surface. Examples of such materials are friction engineered elastomers PolyMod and UltraMod FKM elastomers from PolyMod Technologies; and F-treated fluorocarbon elastomers from Minnesota Rubber & Plastics. Preferably fluoroelastomers are selected from reduced coefficient of friction types such as PolyMod and UltraMod.

### Rubbers

Rubbers generally have a large coefficient of friction (larger than 0.5), except for specially formulated compositions like NBR (Buna N rubbers or Nitrile rubbers or copolymer of polybutadiene and acrylonitrile) and EPDM (ethylene propylene, diene Monomer-M class) rubbers modified by the PolyMod and UltraMod process of PolyMod Technologies. These modifid rubbers with reduced COF (for instance lower than <0.4) are preferred for the guard tape.

### Polyurethane

Polyurethane can be modified as indicated below. It can be made (with hardness and COF in a very wide range) by using additives. For example, PTFE particles can be added to reduce the COF as done in ArmorGlide. Preferably, polyurethane is modified with PTFE for reduced COF.

### Polyvinylchloride

Modified polyvinylchloride (PVC) is preferably modified to lower the coefficient of friction of the surface as indicated below.

### Nylons

Nylon is a generic designation for a family of synthetic polymers known generically as polyamides and first produced in 1935 by DuPont. Nylon is one of the most commonly used polymers. Preferably, nylons are selected from nylon 6,6 nylon 6, nylon 46, and mixtures thereof. Nylons can optionally be modified to reduce the friction of the surface, as for example described in US Patent 4714740. A nylon modified to reduced COF (for instance smaller than 0.4) by means of PTFE, poly methyl methacrylate or other solid additives such as MoS₂ is preferred for the guard tape. Nylatron NSM is a nylon 6 material with solid additives and has a COF of 0.18, and is manufactured by Quadrant Inc.

### Polyolefins

Polyethylene polymer, more generally denominated by polyolefins are preferably selected from Very Low Density PolyEthylene (VLDPE), Linear Low Density PolyEthylene (LLDPE), Low Density PolyEthylene (LDPE), Medium Density PolyEthylene (MDPE), Cross-Linked PolyEthylene (PEX or XLPE), High Density Cross-Linked PolyEthylene (HDXLPE), High Density PolyEthylene (HDPE), High Molecular Weight PolyEthylene (HMWPE), Ultra Low Molecular Weight PolyEthylene (ULMWPE or PE-WAX), Ultra High Molecular Weight PolyEthylene (UHMWPE) and mixtures thereof. More preferably, the polyethylene polymer is selected from polyethylene polymers with a molecular weight of from 3.1 million to 10 million. Most preferably, the polymer is UHMW-PE which is sometimes referred to as High-Modulus PolyEthylene (HM-PE) or High-Performance PolyEthylene (HP-PE). UHMW-PE is generally synthesized from 100,000 to 250,000 ethylene monomer units. The molecular weight is generally between 2 and 6 million. Examples of preferred UHMW-PE compounds are Tivar 1000 (which has a dynamic COF of 0.12 as measured with ASTM D1894), or NOLU-S (by Claremont Polymer), a lubricant-modified UHMWPE with a dynamic coefficient of friction from 0.05.

We have found that UHMW-PE polymer not only provides low friction, excellent protection against damage and tear resistance, but also is sufficiently flexible to be stretched around the frame of a racket in the thickness range described in the preferred embodiment.

If preferred, the top layer can be modified to lower the coefficient of friction which is preferably achieved by addition of lubricants, addition of low friction particles, modification of the polymer or mixtures thereof.

Lubricants are preferably selected from graphite, silicone oil and mixture thereof. Low friction particle additives are preferable selected from PTFE, fluoropolymers, molybdenum disulfide (MoS₂), molecular modification of the polymer, and mixtures thereof.

### Adhesive layer

Preferably, the guard tape has one or more adhesive layers. Preferably, the adhesive is pressure sensitive adhesive, more preferably selected from pressure sensitive adhesive, pressure sensitive rubber adhesive, pressure sensitive acrylic adhesive, pressure sensitive silicone adhesive, and mixtures thereof. Preferably, the adhesive layer has double-sided adhesive and more preferably double sided pressure sensitive adhesive.

Preferably, the adhesive has a thickness from 0.01mm, more preferably from 0.02mm most preferably from 0.05mm and preferably up to 1.0mm, more preferably up to 0.5mm, most preferably up to 0.25mm; particularly preferred is a thickness of 0.05mm to 0.25mm.

### Illustrative material

Preferably, the guard tape contains illustrative materials which preferably contains ink, preferably organized or printed in a pattern, such as a logo or attractive pattern, optionally with colors. Ink, pigment, colored polymers and additives, and other materials that may provide the illustrative pattern or effect, for the purpose of this invention, are defined as ink. Illustrative material indicating the center of the tape - preferably in the shape of a centerline - is particularly preferred, allowing for proper application of the tape in the center of the racket. The centerline can either be provided in ink or be transparent with the remainder of the tape containing illustrative material.

The illustrative material may be printed on the surface of the tape, but repeated impact with the wall and court surface will chafe away the layer and leave marks on the wall. Therefore, the tape preferably contains illustrative material below the surface of the body. More specifically, the illustrative material is located in the body or between the body and the adhesive, preferably in a layer. This way, the illustration will also remain when part of the body is chafed off.

We have found that ink generally has a low sticking coefficient to low friction materials. Consequently, the side of the body to which the ink is attached is preferably primed by means of a preparatory method to improve the adhesion and preferred examples of such preparatory methods include applying a chemical (primer, solvent, and/or adhesive), roughening (sanding), flaming, electrical discharging (corona discharge) and mixtures thereof. One of the methods to apply the illustrative material is to transfer and attach a patterned foil from a backing to the body, after the body of the tape has been primed. After applying this patterned or illustrative foil, the backing is removed, leaving the illustrative material on the primed body. Subsequently, the tape may preferably be heated to further enhance the adhesion. Afterwards, adhesive may be applied. Alternatively, the illustrative material is dispersed throughout the body, or laminated between layers of the body.

### Reinforcing material

To strengthen the body, the tape of the invention preferably contains one or more reinforcing materials preferably selected from fibers, lamination, embossment, and mixtures thereof. Such reinforcing material allows the player to continue playing instead of having to stop to change his low friction guard tape if it rips. Unlike the prior art tapes which can chafe into small separate pieces, reinforcing materials allow clean removal and replacement of the guard tape and can provide a rip-stop effect, enabling an even further enhanced lifetime over non-reinforced tape according to the invention. To enhance tape endurance, any reinforcing material is preferably present inside and/or underneath the top layer and above any cushioning material.

Fibers are preferably selected from high tensile strength fibers and have a tensile strength larger than 100MPa, more preferably larger than 1GPa. Preferably, fibers are selected from natural fibers, metal fibers, fiber glass, aramid (Kevlar, Twaron, Technora), carbon, polyester (PET, PEN), UHMW-PE (Dyneema, Spectra, Certran), liquid crystal polymer (Vectran), poly-(p-phenylene-2, 6-benzobisoxazole) (Zylon) fibers and mixtures thereof. Preferably, the fiber is selected from a knitted fabric, woven fabric, meandered fabric, loose pieces of fiber dispersed randomly or directionally throughout the film and mixtures thereof.

Preferably, the fiber pattern ofthe present invention allows for stretching in the longitudinal direction. Preferably, the fibers are positioned in a stretchable pattern, such that the stretch of the body of claim 1 is larger than 5% for a 500N load.

Preferably, the fiber diameter is smaller than 0.2mm and preferably larger than 0.01mm, while preferably the fibers are larger than 1mm. If present, the fiber layer thickness is preferably less than 1mm, more preferably less than 0.1mm. For the purpose of the invention, fibers may also refer to a fiber assembly, for instance of multiple fibers.

The fibers may be located under the top layer or may be integrated in the top layer (in which case the top layer forms a matrix around the fiber). Fiber incorporation can be achieved by molding the top layer, as a matrix, around the fibers using standard extrusion, or by laminating the fabric between two layers of polymer which may be different (preferably UHMWPE with thermoplastic polyurethane) or may be identical (preferably UHMWPE).

Fiber reinforcement allows usage of generally weaker low friction polymers such as PTFE in the top layer, replacing the stronger UHMWPE which has higher friction coefficient. Alternatively, it allows the use of thinner UHMWPE layer, lowering the overall weight of the tape. Preferred combinations of fibers and top layers are flexible Kevlar fabric laminated with a top layer containing UHMW-PE and/or PTFE. Alternatively, the body may be made of molecules in angled directions to the length of the tape, to allow longitudinal flexing but prevent tearing.

Lamination, with a strength enhancing reinforcing layer, can also increase tear resistance of the guard tape. Preferably, the laminated reinforcing layer is located under the top layer. To increase impact resistance, the laminated reinforcing layer and the top layer are chemically and/or mechanically bonded. The body may be laminated with one or more layers. Since the reinforcing layer is not required to have a low coefficient of friction, there are more options for the choice of this layer than for the top layer. Lamination may occur with two layers of the same material, either with the same or, preferably, different molecule orientation. Preferably, the lamination layer is made from tear resistant (thermoplastic) elastomers such as rubber, fluorocarbon elastomer or polyurethane. Preferably, the laminated reinforcing layer has a thickness of from 0.01mm, and preferably up to 1mm.

Embossment may lead to an intrinsic rip-stop effect, preventing tears, the main form of damage of the guard tape. Embossment may also lower the longitudinal stiffness, allowing the guard tape to be more easily stretched around complex and double curved surfaces.

Preferably, one or more layers of the guard tape has embossment which can increase impact resistance, stretch ability, conformability and cushioning of the guard tape. More preferably, embossment is present in the top layer.

Preferably, embossment reinforcement includes bumps, indents, perforations and mixtures thereof Preferred embossment patterns include embossed circle, honeycomb, staggered diamond, fishnet, angled hash pattern, and mixtures thereof. An example of an embossed patterned layer is shown in the drawings.

Preferably, perforations providing reinforcement particularly regarding rip-stop, are smaller than 1.0mm in size. It should be understood that these perforations can optionally and independently be combined with larger perforations, for instance perforation in the guard tape that prevent coverage of the O-ports (or speed ports) of the Prince rackets.

The adhesive may be mounted on either side of the embossment pattern. The embossment pattern may be single sided or double sided.

### Cushioning material

Preferably, the body of the guard tape contains one or more cushioning materials. Preferably, the cushioning material has a hardness below 90 Shore A, as measured according to ASTM D2240. Cushioning material is preferably selected from soft rubbery or visco-elastic cushioning carrier film. More preferably, the cushioning materials is selected from foam, thermoplastic elastomer, rubber, and mixtures thereof. Preferred foam is acrylic, polyethylene, polyester, polypropylene and mixtures thereof. Preferred cushioning materials are Thermoplastic PolyUrethane (TPU), thermoplastics such as the Isodamp C-1000 series from Cabot Corp and DYAD from Soundcoat Corp, and Sorbothane, a synthetic viscoelastic polyurethane. Preferably, the cushioning materials is present in a layer, which is preferably located under the top layer, at the bottom of the body, and above the adhesive layer.

The weight of the cushioning material should preferably not alter the balance ofthe racket noticeably, hence it is preferably thinner than 1 mm. For beginning players who tend to create more impact on the wall (as opposed to chafing), cushioning material with thickness between 0.15 and 02.5 mm is preferred. For more experienced players, the additional cushioning material may generally not be required, as the adhesive layer itself, for instance within the range 0.025m to 0.25mm, may already provides sufficient cushioning and damping. If present, the thickness of the cushioning layer is preferably between 0.05mm and 1.0mm.

### Packaging of double-curved tape

The invention is further directed to packaging including guard tape, wherein the guard tape is double curved. Packaging material may be selected from paper, plastic and mixtures thereof. We have found that the double curved shape of the guard tape allows for conformability, with minimal manual stretch force, around objects with a double curved surface. The double curved surface shape of the tape has a preferred radius of curvature of more than 1cm and less than 100cm in the longitudinal direction, typically around 5cm, and a preferred radius of curvature more than 0.1cm and less than 10cm in the transverse direction, typically 1 cm. Preferably, the guard tape is wound on a preformed double curved surface of an object, preferably a spool, as storage support for the low friction guard tape. Preferably, the spool has a diameter of at least 1cm and at most 100cm and typically 5cm. Typical radius curvature of the transverse direction of the spool is more than 0.1cm and less than 10cm, typically 1cm. Preferably, the packaged tape contains illustrative materials.

### Method of manufacturing the guard tape

Preferably, the guard tape of the invention is prepared by applying the adhesive layer to the body. The adhesive layer can be applied through direct chemical means. Double-sided pressure sensitive adhesive can be applied to the body by preparing the body through chemical (with primer, adhesive, and/or solvent), mechanical (sanding), flame, or electrical (corona discharge) means to improve the adhesion. Preferably, the adhesive layer is attached to the body with a chemical bond.

Preferably, the illustrative material and the adhesive are connected by flame attachment.

The bond between the top layer and the reinforcing material is preferably hermetic, i.e. chemically and/or mechanically bonded. Upon impact of the guard tape with the court wall or surface, this will prevent the top layer from delaminating and/or tearing. The reinforcing material is preferably bonded to the low friction material with a peel strength of more than 10N/cm to improve tear resistance properties.

The fiber-polymer combination is preferably produced by one ore more of the methods selected from matrix molding, heating polymer covered fibers, covering low friction fibers with adhesive, and mixtures thereof

According to the matrix molding method, the top layer can be molded as a matrix around the fiber fabric using standard extrusion, or the fabric may be laminated between polymer layers. After cool down, the fabric is permanently surrounded by the polymer matrix. An open single or double layer weave is preferred, so that the polymer completely surrounds the fibers, while limiting thickness and weight.

According to the method of heating polymer covered fibers, fibers may be coated with a low friction layer, subsequently assembled (preferably by weaving or knitting) into a stretchable weave. Subsequently, the stretchable weave is heated and pressed (preferably sealed) into a solid body, forming a fiber embedded in polymer matrix. This process can prevent fraying, for instance after cutting to size. To form the polymer matrix around the fiber, the fiber preferably has a melting point higher than that of the polymer. According to the method of covering low friction fibers with adhesive, a flexible weave of low friction fibers can be made, creating a stretchable (as compared to a uniform homogeneous polymer film) and conformable tape from non-stretchable fibers. Glass fibers (which generally do not stretch significantly) can be woven in a fishnet mesh pattern, or staggered diamond pattern, creating a sufficiently stretchable conformable pattern. In combination with a high tack adhesive, it provides for a strong, flexible and slippery low friction guard tape.

To manufacture the double-curved guard tape of the invention, the guard tape is preferably molded in a double curved shape. Preferably, the guard tape is subsequently wrapped around a spool. Preferably, the guard tape is wrapped in packaging.

### Game Rackets

Game rackets that can be improved with the guard tape of the invention generally have a frame made of composite, metal, plastic or wood and can be used in sports such as tennis, squash and racket ball. The head of the frame of the game racket has a double curved surface. The racket may comprise a bumper which can be integrated through stringing or clipped on the racket. Some rackets have O-ports (or speedports); in order not to cover these ports with the guard tape of the invention, the guard tape of the invention can be taped on one or both sides of the racket frame or, alternatively, the guard tape can contain perforations that match in size with the O-ports, or the tape may cover the ports entirely.

### Tape application

According to a preferred embodiment of the invention, tape (preferably double curved) is applied to the surface of an object, wherein the tape is attached to (and preferably stretched over) the surface of the object. The surface is preferably doubled curved. The object is preferably selected from a spool and a game racket, in particular the head of the frame of a game racket. As shown in the drawings, the guard tape can be pulled along the top head portion of an object, such as a game racket, without resulting in creased and folded edges. If the radius of curvature of the preformed low friction guard tape is smaller than that of the object to which it will be attached (e.g. a racket frame), the edges will undergo a tensile, instead of compressive, stress, allowing a smooth attachment ofthe tape and preventing folds and creases.

### Example

The top of the frames of two squash rackets were taped. One frame (racket A, comparative example) was taped with Karakal Crash Tape with a width of 2.5cm, a thickness of 0.5mm, a length of 240 cm and an estimated friction coefficient of 0.7. The other frame (racket 1, with guard tape according to the invention) was taped with commercially available UHMW-PE tape (brand UHMW-PE 19-5R) which had a width of 3cm. The rubber adhesive had a thickness of 0.127mm and the UHMWPE of 0.127mm. The piece was 35cm in length. The friction coefficient was estimated to be 0.2.
After 4 hours of play, the tape of racket A required replacement as it had too many abrasions and cuts, exposing the racket and grommet surfaces. Removing all the tape to ensure a clean surface took about 5 minutes. Placing a new piece took about 30 seconds. After 4 hours of playing, the tape of racket 1 was still intact and functional. After 20 hours of playing, the tape had a few cuts smaller than 1 cm and narrower than 1 mm. The tape of racket 1 was taken off the racket in one move taking less than 15 seconds. Replacing the tape with a new piece of the same tape took about 30 seconds, meaning a shorter net replacement time as compared to the tape of the prior art.
It can be concluded that the racket with the guard tape of the invention should substantially less wear. Guard tape replacement time was minimal, also because the guard tape could be manually stretched for application to the racket. The guard tape is light of weight, not perceptibly affecting the weight distribution of the racket. The guard tape of the invention showed an increased chance of properly returning balls when sliding the racket against court walls and surfaces.

## Claims

1. Game racket with a low friction tape containing a body and an adhesive layer wherein the body has a top layer with a dynamic coefficient of friction of less than 0.4.

2. Game racket according to claim 1, wherein the top layer has a friction coefficient of less than 0.2.

3. Game racket according to claims 1-2, wherein the body contains ultra-high molecular weight polyethylene.

4. Game racket according to claims 1-3, wherein the adhesive is a double sided pressure sensitive adhesive with thickness between 0.02mm and 1mm.

5. Game racket according to claims 1-4, wherein the longitudinal stretch of the tape is larger than 5% for a longitudinal load of 500N.

6. Game racket according to claims 1-5, wherein the body contains illustrative material.

7. Low friction tape containing a body and an adhesive layer wherein the body contains a top layer with a dynamic coefficient of friction of less 0.4 and wherein the body further contains reinforcing material.

8. Tape according to claim 7, wherein the body contains illustrative material.

9. Tape according to claims 7-8, wherein the tape further contains a reinforcing material selected from fibers, lamination, embossment, and mixtures thereof.

10. Tape according to claims 7-9, wherein the tape contains fibers with a tensile strength larger than 100MPa.

11. Tape according to claims 7-10, wherein the tape contains cushioning material.

12. Method of manufacturing tape with an adhesive layer and a body containing a low friction top layer and reinforcing material, wherein the adhesive layer is attached to the body with a chemical bond and wherein the tape preferably contains illustrative material.

13. Packaging containing tape, wherein the tape has a low friction surface with a dynamic coefficient of friction of less than 0.4 and is double curved.

14. Packaging according to claim 13, wherein the packaged tape contains illustrative materials.

15. Method of applying tape to a racket wherein the tape has a top layer with a dynamic coefficient of friction of less than 0.4 and the tape is attached to the surface of the racket, the tape preferably containing illustrative material.
